# EUROPEAN PATENT APPLICATION

(11) **EP 4 847 173 A1**
(43) Date of publication of application: **02.12.2026**
(21) Application number: 25762409.8
(22) Date of filing: 28.02.2025
(51) Int. Cl.: B23B 23/00, B23B 23/02, B23B 23/04, B23Q 3/08

(54) **TAIL STOCK OF MACHINE TOOL**

(30) Priority: 29.02.2024 KR 20240029558
(71) Applicant: DN Solutions Co., Ltd., Changwon-si, Gyeongsangnam-do 51537 (KR)
(72) Inventor: KIM, Sugwang, Changwon-Si, Gyeongsangnam-do 51537 (KR)
(74) Representative: BCKIP Part mbB
(86) International application number: PCT/KR2025/002799
(87) International publication number: WO 2025/183492

(57) **Abstract**

The present disclosure relates to a tail stock of machine tool, the tail stock comprising: a housing part; a piston part disposed at one internal side of the housing part; a quill portion arranged to be capable of linear reciprocating movement with respect to the piston part inside the housing part to support a workpiece; an advancing flow path part formed in the piston part, the advancing flow path part having a drain hole and for introducing or discharging pressure to advance the quill portion; a return flow path portion formed in the piston part for introducing or discharging pressure to return the quill portion to a home position; and a groove portion formed on a pressing surface at one end of the piston part adjacent to the quill portion.

## Description

### Technical field

The present disclosure relates to tail stock of machine tool, and more specifically, to tail stock of machine tool for buffering an impact between a quill portion and a pressing surface when the quill portion returns to a home position.

### Background art

Generally, a machine tool refers to a machine used for the purpose of machining metal/non-metal workpieces to a desired geometry and dimension using various cutting methods or non-cutting methods with appropriate tools.

Various types of machine tools, including turning centers, vertical/horizontal machining centers, bridge-type machining centers, Swiss turns, electrical discharge machines, horizontal NC boring machines, CNC lathes, and multitasking machines, are widely used in various industrial sites according to the purpose of the corresponding work.

A multitasking machine among machine tools refers to a turning center equipped with a multifunctional automatic tool changer (ATC) and a tool magazine, which performs various types of machining such as turning, drilling, tapping, and milling.

In a multitasking machine, when an operator loads or exchanges tools required for machining, the tools are manually mounted in the tool magazine.

Generally, various types of machine tools currently in use include an operator panel to which numerical control (NC) or computerized numerical control (CNC) technology is applied.

Such an operator panel includes various function switches or buttons and a monitor.

In addition, a machine tool includes a table that is configured to receive a workpiece material and feed it for machining the workpiece, a pallet for preparing the workpiece before machining, a spindle that rotates with a tool or a workpiece coupled thereto, and a tail stock, a steady rest, and the like for supporting the workpiece, etc., during machining. Generally, in a machine tool, the table, tool post, spindle, tail stock, steady rest, and the like include a feed unit that feeds along a feed axis to perform various machining operations.

In addition, generally, a machine tool uses a plurality of tools for various machining, and a tool magazine or a turret is used in the form of a tool storage location that stores and holds a plurality of tools.

Such machine tools use a plurality of tools for various machining, and a tool magazine is used in the form of a tool storage location that stores and holds a plurality of tools.

In addition, generally, a machine tool includes an automatic tool changer (ATC) for extracting or storing a specific tool from the tool magazine according to a command from a numerical control unit in order to improve productivity of the machine tool.

In addition, generally, a machine tool includes an automatic pallet changer (APC) to minimize non-machining time.

The automatic pallet changer (APC) automatically exchanges a pallet between a workpiece machining area and a workpiece loading area.

A workpiece may be mounted on the pallet.

In addition, generally, machine tools are largely classified into a turning center (TURNING CENTER) and a machining center (MACHINING CENTER) according to a machining method.

Generally, in a turning center, a workpiece rotates, and in a machining center, machining of a workpiece is performed while a tool rotates.

Generally, a machine tool that can implement various machining processes such as turning, milling, drilling, tapping, and boring in a single workpiece step in one machine tool is called a multitasking machine (multi-task center or integrated mill turn center).

By using such a multitasking machine, it is possible to improve productivity and precision, as well as to reduce lead time, the number of parts, workload, and workspace.

Among these, a turning center, also referred to as a lathe, is an apparatus that machines a workpiece by bringing a tool toward the workpiece while the workpiece mounted on a spindle is rapidly rotated.

In particular, a turning center may include a tail stock for fixedly supporting a free end of a workpiece.

The tail stock is movably disposed in a machine tool to support a free end of a machining material, thereby preventing deflection or buckling of the machining material to improve machining quality.

The tail stock includes a quill portion installed on a piston part to support a workpiece, and the quill portion advances or returns to the home position (retracts) with respect to the piston part.

In a conventional machine tool, the tail stock had a problem in that noise was generated due to the quill portion colliding with the piston part during the return of the quill portion to the home position (retraction) in the process of advancing the quill portion or returning the quill portion to the home position (retraction).

As a solution to the aforementioned noise generation problem, the tail stock of a conventional machine tool had applied a method of slowing down the speed at which the quill portion returns to the home position (retraction speed) by installing a separate speed control valve in a hydraulic line for the operation of the quill portion.

However, while the aforementioned noise generation problem can be improved by installing a separate speed control valve in this manner, another problem has arisen in that an increase in non-machining time is caused by slowing down the speed at which the quill portion returns to the home position (retraction speed). Additionally, a problem has arisen in that additional assembly time for adjusting the speed control valve is required to find a condition where the speed control valve is fixed such that the noise is not severe and the speed at which the quill portion returns to the home position (retraction speed) is not too slow.

### Summary of invention

### Technical problem

The present disclosure is directed to solving the problems described above, and an object of the present disclosure is to provide tail stock of machine tool that can buffer the impact between the quill portion and a pressing surface by generating a vortex through the groove portion when the quill portion returns to a home position, thereby reducing noise generation while the quill portion rapidly returns to the home position, reducing maintenance costs of the tail stock, and promoting an increase in productivity by reducing non-machining time.

### Solution to problem

In order to achieve the objects of the present disclosure, a tail stock of machine tool according to the present disclosure may include: a housing part; a piston part disposed at one internal side of the housing part; a quill portion arranged to be capable of linear reciprocating movement with respect to the piston part inside the housing part to support a workpiece; an advancing flow path part formed in the piston part, the advancing flow path part having a drain hole and for introducing or discharging pressure to advance the quill portion; a return flow path portion formed in the piston part for introducing or discharging pressure to return the quill portion to a home position; and a groove portion formed on a pressing surface at one end of the piston part adjacent to the quill portion.

In a preferred embodiment of a tail stock of machine tool according to the present disclosure, a vortex can be generated through the groove portion when pressure is discharged through the advancing flow path part as the quill portion moves in a direction adjacent to the pressing surface in order to return to a home position, thereby buffering the impact between the quill portion and the pressing surface.

In a preferred embodiment of a tail stock of machine tool according to the present disclosure, the drain hole may be disposed at a center of the pressing surface.

In a preferred embodiment of a tail stock of machine tool tool according to the present disclosure, the groove portion may be formed to be in a tangential direction of a flow direction of the pressure discharged through the advancing flow path part.

In a preferred embodiment of a tail stock of machine tool according to the present disclosure, the groove portion may be formed in a form of a plurality of concentric circles with respect to a center of the drain hole.

In a preferred embodiment of a tail stock of machine tool according to the present disclosure, a spacing between the plurality of concentric circles may be at least 0.1 times and at most 0.3 times a diameter of the pressing portion.

In a preferred embodiment of a tail stock of machine tool according to the present disclosure, the groove portion may comprise a plurality of groove elements each having a circular cross-sectional shape.

In a preferred embodiment of a tail stock of machine tool according to the present disclosure, the groove portion may comprise a plurality of groove elements each having a rectangular cross-sectional shape.

In a preferred embodiment of a tail stock of machine tool according to the present disclosure, the groove portion may comprise a plurality of groove elements each having an elliptical cross-sectional shape.

In a preferred embodiment of a tail stock of machine tool according to the present disclosure, the advancing flow path part may be formed in the piston part to be bent at least once.

### Advantageous effects of invention

In a tail stock of machine tool according to the present disclosure, when the quill portion returns to a home position, a vortex is generated through the groove portion formed on a pressing surface at one end of the piston part, thereby buffering the impact between the quill portion and the pressing surface, which allows the quill portion to return to the home position quickly while reducing noise caused by the impact between the quill portion and the pressing surface.

In addition, since the tail stock of machine tool according to the present disclosure does not need to install a separate speed control valve as in the conventional art, there is an effect of reducing manufacturing costs of the tail stock by omitting the cost for installing the speed control valve.

Furthermore, since the tail stock of machine tool according to the present disclosure does not require additional assembly time for speed control valve adjustment to find conditions where the speed control valve is fixed such that noise is not severe and the speed at which the quill portion returns to the home position (retraction speed) is not too slow, there is an effect of reducing speed control valve assembly time.

In addition, in a tail stock of machine tool according to the present disclosure, as a vortex is generated through the groove portion when the quill portion returns to a home position, thereby buffering the impact between the quill portion and the pressing surface, the quill portion can return to the home position quickly, so there is an effect of maximizing productivity by shortening the machining cycle time.

The effects of the present disclosure are not limited to the effects mentioned above, and other effects not mentioned will be clearly understood by those skilled in the art from the description below.

### Brief description of drawings

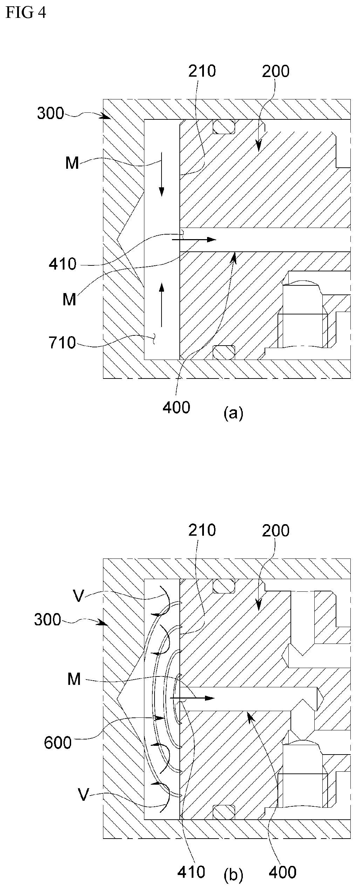

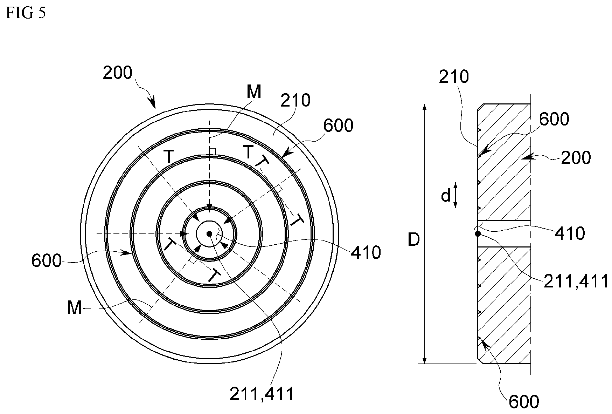

FIG. 1 is a side cross-sectional view showing a state in which a quill portion of a tail stock of machine tool according to the present disclosure is advanced.
FIG. 2 is a side cross-sectional view showing a state just before a quill portion of a tail stock of machine tool according to the present disclosure returns to a home position.
FIG. 3 is a side cross-sectional view showing a state in which a quill portion of a tail stock of machine tool according to the present disclosure has returned to a home position.
(a) of FIG. 4 is a view showing a flow direction in which pressure is discharged through an advancing flow path part in a state in which a groove portion is not formed when the quill portion returns to the home position, and (b) is a view showing a state in which a vortex is formed when pressure is discharged through the advancing flow path part in a state in which the groove portion is formed when the quill portion returns to the home position.
The left drawing of FIG. 5 is a front view of a pressing surface of the piston part showing the groove portion in a concentric circle shape, and the right drawing shows a side view of the pressing surface of the piston part in which the groove portion is in a concentric circle shape.

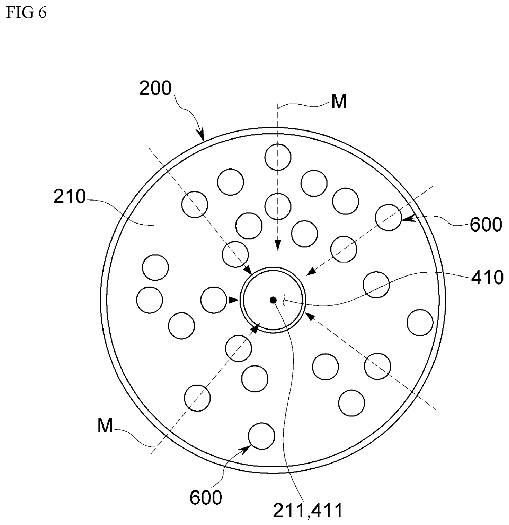

FIG. 6 is a front view of a pressing surface of a piston part of a tail stock of machine tool according to the present disclosure, showing a drawing in which the groove portion is in a circular shape.

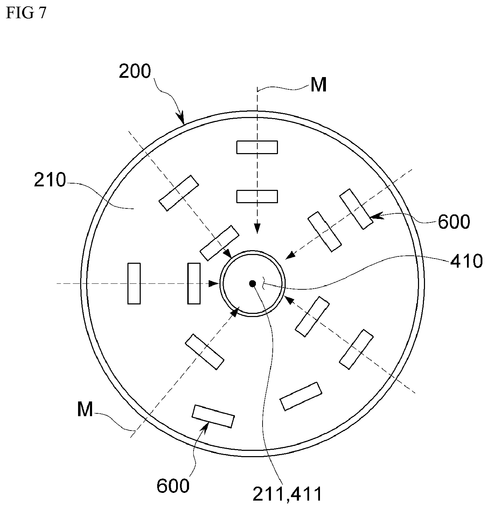

FIG. 7 is a front view of a pressing surface of a piston part of a tail stock of machine tool according to the present disclosure, showing a drawing in which the groove portion is in a rectangular shape.

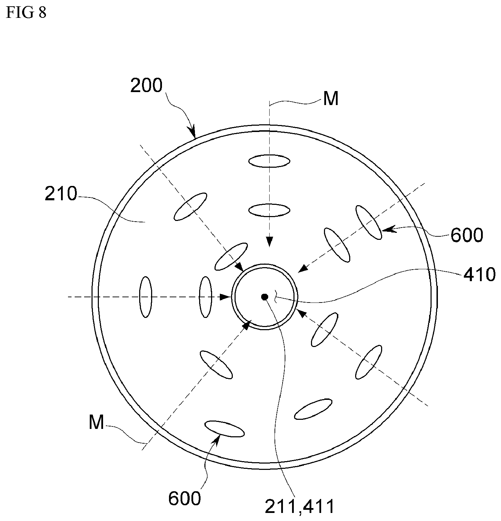

FIG. 8 is a front view of a pressing surface of a piston part of a tail stock of machine tool according to the present disclosure, showing a drawing in which the groove portion is in an elliptical shape.

### Description of embodiments

Below, the embodiments of the present disclosure will be described in detail with reference to drawings of a tail stock of machine tool.

The embodiments introduced below are provided as examples so that the spirit of the present disclosure can be sufficiently conveyed to those skilled in the art.

Therefore, the present disclosure may be embodied in other forms and is not limited to the embodiments described below.

And, in the drawings, the size and thickness of the apparatus may be exaggerated for convenience.

Identical reference numerals throughout the specification represent the same components. The advantages and features of the present disclosure, and the methods for achieving them, will become clear with reference to the embodiments described in detail below together with the accompanying drawings.

However, the present disclosure is not limited to the embodiments disclosed below but will be implemented in various different forms, and the present embodiments are provided merely to make the disclosure of the present disclosure complete and to fully inform those skilled in the art of the scope of the invention, and the present disclosure is defined only by the scope of the claims.

Identical reference numerals throughout the specification represent the same components. The size and relative size of layers and regions in the drawings may be exaggerated for clarity of description.

The terms used in the present specification are for describing embodiments and, therefore, do not intend to limit the present invention.

In the present specification, a singular form includes a plural form unless otherwise specifically mentioned in a phrase.

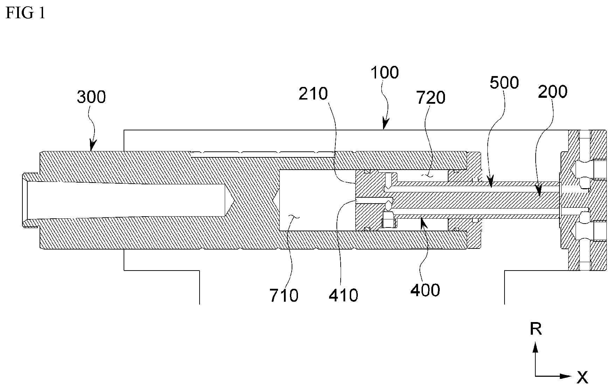

"Includes (comprise)" and/or "comprising" used in the specification do not exclude the presence or addition of one or more other components, steps, operations, and/or elements. FIG. 1 shows a side cross-sectional view of a tail stock of machine tool according to the present disclosure in a state where a quill portion is advanced.

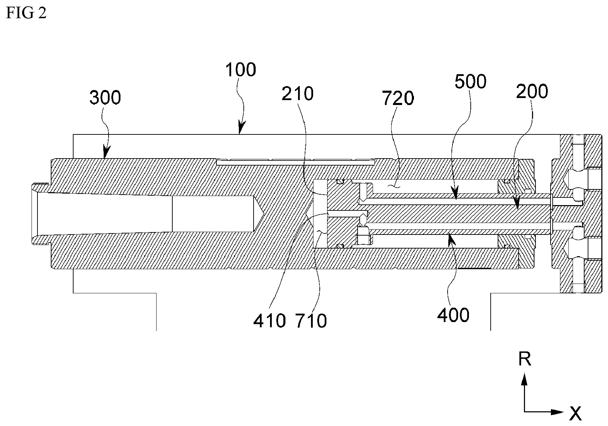

FIG. 2 shows a side cross-sectional view of a tail stock of machine tool according to the present disclosure in a state just before the quill portion of the tail stock is returned to a home position.

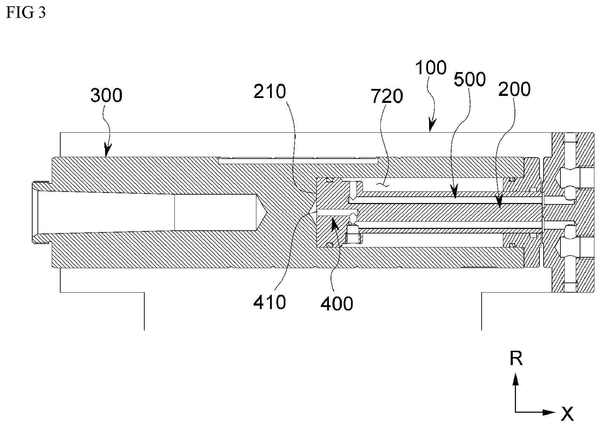

FIG. 3 shows a side cross-sectional view of a tail stock of machine tool according to the present disclosure in a state where the quill portion is returned to a home position.

(a) of FIG. 4 is a view showing a flow direction in which pressure is discharged through an advancing flow path part in a state where a groove portion is not formed when the quill portion returns to the home position, and (b) is a view showing a state in which a vortex is formed when pressure is discharged through the advancing flow path part when the quill portion returns to the home position in a state where the groove portion is formed. The left drawing of FIG. 5 is a front view of a pressing surface of the piston part showing the groove portion in a concentric circle shape, and the right drawing shows a side view of the pressing surface of the piston part in which the groove portion is in a concentric circle shape.

FIG. 6 shows a front view of a pressing surface of a piston part of a t tail stock of machine tool according to the present disclosure, in which the groove portion is in a circular shape.

FIG. 7 shows a front view of a pressing surface of a piston part of a tail stock of machine tool according to the present disclosure, in which the groove portion is in a rectangular shape.

FIG. 8 shows a front view of a pressing surface of a piston part of a tail stock of machine tool according to the present disclosure, in which the groove portion is in an elliptical shape.

Definitions of terms used below are as follows.

"Axial direction" means an axial direction (i.e., X-direction in FIG. 1) in which the quill portion moves linearly, and "radial direction" means a direction expanding radially from the axial direction (i.e., R-direction in FIG. 1).

The tail stock 1 of a machine tool according to the present disclosure will be described with reference to FIGS. 1 to 8.

As shown in FIGS. 1 to 8, the tail stock 1 of a machine tool according to the present disclosure includes a housing part 100, a piston part 200, a quill portion 300, an advancing flow path part 400, a return flow path portion 500, and a groove portion 600.

The tail stock 1 of a machine tool according to the present disclosure is for fixing and supporting a free end of a workpiece.

Specifically, one side of a relatively long workpiece is clamped and fixed to a chuck (not shown in the drawings), and the other side free end of the workpiece is supported by the tail stock, thereby preventing sagging or buckling of the workpiece during machining, improving machining quality, and maximizing machining precision.

The housing part 100 of the tail stock 1 of a machine tool according to the present disclosure forms an external shape of the tail stock 1, and serves to protect the piston part 200, the quill portion 300, the advancing flow path part 400, the return flow path portion 500, and the groove portion 600 disposed therein.

The piston part 200 of the tail stock 1 of a machine tool according to the present disclosure is disposed at one internal side of the housing part 100, and an advancing flow path part 400 and a return flow path portion 500 are formed therein such that pressure can be transmitted to the quill portion 300.

The piston part 200 may include a pressing surface 210 at one end of the piston part 200 adjacent to the quill portion 300.

The quill portion 300 of the tail stock 1 of a machine tool according to the present disclosure is disposed to be capable of linear reciprocating movement with respect to the piston part 200 inside the housing part 100 to serve a role of supporting a workpiece.

A live center (not shown in the drawings) etc. are disposed at a front end of the quill portion 300 to support a free end of the workpiece using the live center etc.

The advancing flow path part 400 of the tail stock 1 of a machine tool according to the present disclosure is formed in the piston part 200 to introduce or discharge pressure for advancing the quill portion 300.

The advancing flow path part 400 includes a drain hole 410 formed at a front end thereof, and pressure for advancing the quill portion 300 may be introduced into or discharged from a first chamber 710 through the drain hole 410.

In addition, referring to FIGS. 1 to 3, the advancing flow path part 400 may be formed in the piston part 200 such that it is bent one or more times.

When the advancing flow path part 400 is formed to be bent one or more times, it becomes convenient to arrange the drain hole 410 formed at a front end of the advancing flow path part 400 at a center 211 of the pressing surface.

In addition, when the advancing flow path part 400 is formed to be bent one or more times, the pressure being discharged from the first chamber 710 in a flow direction M through the drain hole 410 can be controlled by adjusting the number of times the advancing flow path part 400 is bent.

Vortex V generated on the pressing surface can be controlled by controlling the pressure being discharged from the first chamber 710 in the flow direction M through the drain hole 410.

That is, the more times the advancing flow path part 400 is bent, the more the flow of pressure flowing through the advancing flow path part 400 is obstructed, so the pressure being discharged in the flow direction M through the drain hole 410 decreases.

Meanwhile, the fewer times the advancing flow path part 400 is bent, the less the flow of pressure flowing through the advancing flow path part 400 is obstructed, so the pressure being discharged in the flow direction M through the drain hole 410 increases.

Referring to FIG. 1, when the quill portion 300 moves forward, pressure is introduced into the advancing flow path part 400, and pressure is introduced into the first chamber 710 through the drain hole 410.

Thereafter, the quill portion 300 is moved forward by the pressure introduced into the first chamber 710.

Referring to FIGS. 2 to 3, when the quill portion 300 returns to a home position, pressure is discharged from the advancing flow path part 400, and pressure is discharged from the first chamber 710 in the flow direction M through the drain hole 410.

Referring to FIGS. 5 to 8, the drain hole 410 may be disposed at a center 211 of the pressing surface.

In addition, although not necessarily limited thereto, the center 211 of the pressing surface and the center 411 of the drain hole may coincide. As described above, when pressure is discharged from the advancing flow path part 400 in a flow direction M through the drain hole 410, pressure is discharged from the first chamber 710 for returning the quill portion 300 to the home position.

If the drain hole 410 is not disposed at the center 211 of the pressing surface 210, the flow direction M in which pressure is discharged becomes biased to one side of the center 211 of the pressing surface 210 with respect to the pressing surface 210.

In this way, when the flow direction (M) is biased to one side from the center (211) of the pressing surface, vortices (V) generated by the groove portion (600) are not uniformly generated on the pressing surface (210), and there may even be parts where the vortices (V) are generated to an insufficient degree to provide a buffering effect on a specific part of the pressing surface (210), or where the vortices (V) are not generated at all.

When the vortices (V) are not uniformly generated on the pressing surface (210) as such, the force that buffers the impact between the quill portion and the pressing surface when the quill portion returns to a home position becomes non-uniform, and as described above, there may occur parts where the vortices are insufficient to provide a buffering effect or where vortices are not generated in specific parts, which may fail to properly buffer the impact between the quill portion and the pressing surface and may cause noise to occur. Accordingly, the tail stock (2) of a machine tool according to the present disclosure can allow the vortices (V) to be uniformly generated on the pressing surface (210) by disposing the drain hole (410) at the center (211) of the pressing surface (210), thereby making the flow direction (M) in which pressure is discharged through the drain hole (410) be the center (211) of the pressing surface (210) with respect to the pressing surface (210).

By allowing the vortices (V) to be uniformly generated on the pressing surface (210) as such, the impact between the quill portion and the pressing surface is sufficiently and uniformly buffered, so that the quill portion can return to a home position quickly while reducing noise caused by the impact between the quill portion and the pressing surface.

The return flow path portion (500) of the tail stock (1) of a machine tool according to the present disclosure is formed in the piston part (200) to introduce or discharge pressure for returning the quill portion (300) to a home position.

Referring to FIG. 1, when the quill portion 300 moves forward, pressure is introduced into the advancing flow path part 400 and discharged from the return flow path portion 500, as described above.

Referring to FIGS. 2 to 3, when the quill portion 300 returns to a home position, pressure is discharged from the advancing flow path part 400 and introduced into the second chamber 720 through the return flow path portion 500, as described above.

Thereafter, the quill portion 300 is moved to return to the home position by the pressure introduced into the second chamber 720.

The groove portion 600 of the tail stock 1 of a machine tool according to the present disclosure may be formed on a pressing surface 210 at one end of the piston part 200 adjacent to the quill portion 300.

The tail stock 1 of a machine tool according to the present disclosure may buffer an impact between the quill portion 300 and the pressing surface 210 by generating a vortex (V) through the groove portion 600 when pressure is discharged through the advancing flow path part 400 as the quill portion 300 moves in a direction adjacent to the pressing surface 210 in order for the quill portion 300 to return to a home position.

In this way, the tail stock of a machine tool according to the present disclosure can allow the quill portion to return to a home position quickly while reducing noise caused by the impact between the quill portion and the pressing surface, as a vortex is generated through the groove portion formed on a pressing surface at one end of the piston part when the quill portion returns to a home position.

In addition, the tail stock of a machine tool according to the present disclosure does not need to install a separate speed control valve as in the conventional art, so the manufacturing cost of the tail stock can be reduced by omitting the cost for installing the speed control valve.

Furthermore, the tail stock of a machine tool according to the present disclosure does not require additional assembly time for adjusting the speed control valve to find a condition where the speed control valve is fixed such that the speed at which the quill portion returns to the home position (retraction speed) is not too slow while the noise is not severe as in the conventional art, thereby reducing the speed control valve assembly time.

Referring to FIG. 5, the groove portion 600 may be formed to be in a tangential direction (T-T) of a flow direction (M) of pressure discharged through the advancing flow path part 400.

When the groove portion 600 is formed to be in a tangential direction (T-T) of the flow direction (M) of pressure as such, the pressure flow discharged through the advancing flow path part 400 along the flow direction (M) can be effectively obstructed, thereby allowing vortices (V) to be generated through the groove portion 600 most efficiently.

Referring to FIG. 5, the groove portion 600 may be formed in a plurality of concentric circle shapes with respect to a center 411 of the drain hole.

When the groove portion 600 is formed in a plurality of concentric circle shapes with respect to the center 411 of the drain hole as such, vortices (V) can be generated uniformly across the entire pressing surface 210 more than in the case of having a single groove portion 600.

And, a spacing (d) between the plurality of concentric circles may be formed to be at least 0.1 times and up to 0.3 times a diameter (D) of the pressing portion.

If the spacing (d) between the plurality of concentric circles is formed to be less than 0.1 times the diameter (D) of the pressing portion, the concentric circles are disposed too much on the pressing surface 210, which results in too many vortices (V) being generated on the pressing surface 210.

When the vortices (V) generated on the pressing surface 210 become too many as such, the vortices (V) cancel each other out, leading to a problem where the impact between the quill portion 300 and the pressing surface 210 is not sufficiently buffered, and thus the noise caused by the impact between the quill portion and the pressing surface cannot be reduced.

Meanwhile, if the spacing (d) between the plurality of concentric circles is formed to be greater than 0.3 times the diameter (D) of the pressing portion, the concentric circles are disposed too sparsely on the pressing surface 210, resulting in fewer vortices (V) generated on the pressing surface 210.

When the vortices (V) generated on the pressing surface 210 become too few as such, a problem arises where the impact between the quill portion 300 and the pressing surface 210 is not sufficiently buffered, and thus the noise caused by the impact between the quill portion and the pressing surface cannot be reduced.

Preferably, the spacing (d) between the plurality of concentric circles may be formed to be 0.2 times the diameter (D) of the pressing portion.

When the spacing (d) between the plurality of concentric circles is 0.2 times the diameter (D) of the pressing portion as such, the pressure flow discharged through the advancing flow path part 400 is effectively obstructed, thereby generating vortices (V) through the groove portion 600 formed on the pressing surface 210 most efficiently, so that the quill portion can return to a home position quickly while reducing noise caused by the impact between the quill portion and the pressing surface.

Referring to FIG. 6, the groove portion 600 may comprise a plurality of groove elements each having a circular cross-sectional shape.

Each of the plurality of groove elements may have a circular cross-sectional shape and may be recessed into the pressing surface 210 or may protrude from the pressing surface 210.

In addition, the plurality of groove elements may be uniformly formed on the pressing surface 210 at constant intervals, or may be non-uniformly formed on the pressing surface 210 at different intervals as necessary.

Referring to FIG. 7, the groove portion 600 may comprise a plurality of groove elements each having a rectangular cross-sectional shape.

Each of the plurality of groove elements may have a rectangular cross-sectional shape and may be recessed into the pressing surface 210 or may protrude from the pressing surface 210.

In addition, the plurality of groove elements may be uniformly formed on the pressing surface 210 at constant intervals, or may be non-uniformly formed on the pressing surface 210 at different intervals as necessary.

Referring to FIG. 8, the groove portion 600 may comprise a plurality of groove elements each having an elliptical cross-sectional shape.

Each of the plurality of groove elements may have an elliptical cross-sectional shape and may be recessed into the pressing surface 210 or may protrude from the pressing surface 210.

In addition, the plurality of groove elements may be uniformly formed on the pressing surface 210 at constant intervals, or may be non-uniformly formed on the pressing surface 210 at different intervals as necessary.

As such, the tail stock of machine tool according to the present disclosure can maximize productivity by shortening the machining cycle time, as vortices are generated through the groove portion when the quill portion returns to a home position, and the impact between the quill portion and the pressing surface is buffered through the groove portion by forming the cross-section geometry of the groove portion in various shapes such as circular, rectangular, or elliptical.

While the detailed description of the present disclosure described above was explained with reference to preferred embodiments of the present disclosure, it will be understood by those skilled in the art or those having ordinary skill in the art that the present disclosure may be variously modified and changed within the scope of the spirit and technical field of the present disclosure not departing from the scope of the claims to be described later.

Therefore, the technical scope of the present disclosure shall not be limited to the contents described in the detailed description of the specification but shall be determined by the claims.

### Description of Main Reference Numerals of Drawings

- 100:: housing part
- 200:: piston part
- 300:: quill portion
- 400:: advancing flow path part
- 500:: return flow path portion
- 600:: groove portion

## Claims

1. A tail stock of machine tool, the tail stock comprising:
a housing part;
a piston part disposed on one internal side of the housing part;
a quill portion arranged inside the housing part to be capable of linear reciprocating movement with respect to the piston part and to support a workpiece;
an advancing flow path part formed in the piston part, the advancing flow path part including a drain hole and configured to introduce or discharge pressure for advancing the quill portion;
a return flow path portion formed in the piston part and configured to introduce or discharge pressure for returning the quill portion to a home position; and
a groove portion formed on a pressing surface at one end of the piston part adjacent to the quill portion.

2. The tail stock of claim 1, wherein, when pressure is discharged through the advancing flow path part while the quill portion moves toward the pressing surface to return to the home position, a vortex is generated through the groove portion, thereby buffering an impact between the quill portion and the pressing surface.

3. The tail stock of claim 2, wherein the drain hole is disposed at a center of the pressing surface.

4. The tail stock of claim 3, wherein the groove portion is formed in a direction tangential to a flow direction of pressure discharged through the advancing flow path part.

5. The tail stock of claim 4, wherein the groove portion is formed in a plurality of concentric circles centered on a center of the drain hole.

6. The tail stock of claim 5, wherein a spacing between the plurality of concentric circles is at least 0.1 times and at most 0.3 times a diameter of the pressing portion.

7. The tail stock of claim 4, wherein the groove portion comprises a plurality of groove elements each having a circular cross-sectional shape.

8. The tail stock of claim 4, wherein the groove portion comprises a plurality of groove elements each having a rectangular cross-sectional shape.

9. The tail stock of claim 4, wherein the groove portion comprises a plurality of groove elements each having an elliptical cross-sectional shape.

10. The tail stock of claim 3, wherein the advancing flow path part is formed in the piston part to be bent at least once.
